# DEMANDE DE BREVET EUROPEEN

(11) **EP 1 304 587 A1**
(43) Date de publication de la demande: **23.04.2003**
(21) Numéro de dépôt: 02292571.3
(22) Date de dépôt: 17.10.2002
(51) Int. Cl.: G02B 6/34

(54) **Module multiplexeur/démultiplexeur à réseaux de dispersion angulaire**

(30) Priorité: 18.10.2001 FR 0113441
(71) Demandeur: Alcatel Optronics France, 75008 Paris (FR)
(72) Inventeur: Patoz, Vincent, 91120 Palaiseu (FR)
(74) Mandataire: Feray, Valérie

(57) **Abrégé**

Module optique comprenant un composant multiplexeur/démultiplexeur à réseaux de dispersion angulaire (20), ledit composant multiplexeur/démultiplexeur (20) comprenant au moins un guide d'onde d'entrée (11) et au moins un guide d'onde de sortie caractérisé en ce que le module est intégré et comprend au moins une fibre optique d'entrée et au moins une fibre optique de sortie, ledit guide d'onde d'entrée présentant une interface de couplage optique avec la fibre optique d'entrée et ledit guide d'onde de sortie présentant une interface de couplage optique avec la fibre optique de sortie et en ce que ledit filtre couches minces (5) est inséré directement à l'interface de couplage optique entre le(s) guide(s) d'onde d'entrée et/ou de sortie du composant multiplexeur/démultiplexeur et la(les) fibre(s) optique(s) d'entrée et/ou de sortie du module.

## Description

La présente invention se rapporte au domaine des composants multiplexeurs/démultiplexeurs en longueur d'onde, et plus spécifiquement aux multiplexeurs/démultiplexeurs à réseaux de dispersion angulaire désignés par la suite par AWG pour « Arrayed Waveguide Grating » en anglais. De tels composants sont classiquement utilisés pour des applications de multiplexage et/ou démultiplexage, ou pour des applications de sélection en longueur d'onde, connue sous le terme anglais de Add and Drop Multiplexing.

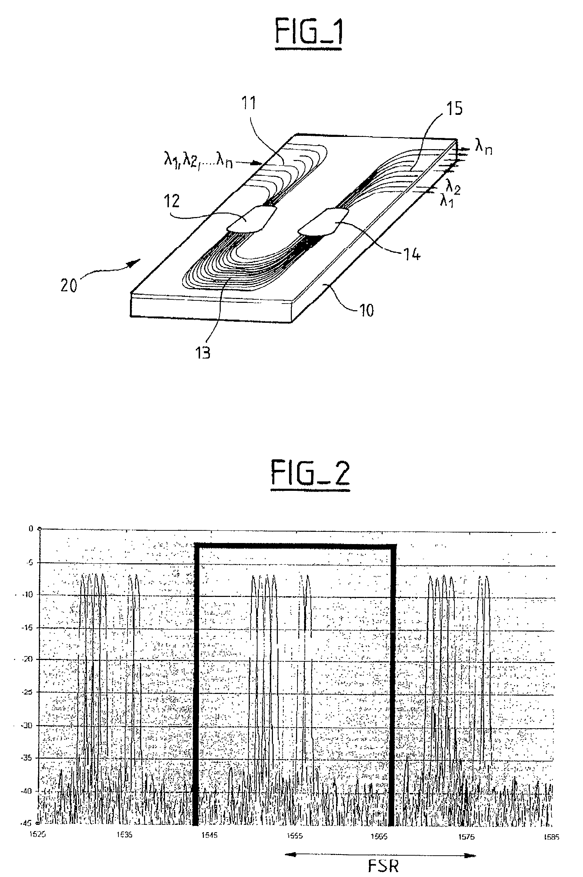

La figure 1 illustre schématiquement un composant AWG 20 classique intégré sur un substrat 10, par exemple en silicium. Des guides d'onde d'entrée 11 transmettent des signaux optiques à des longueurs d'onde données λ₁, λ₂, ... λₙ dans un coupleur d'entrée 12 vers un réseau de guides d'onde 13. Les signaux optiques subissent des déphasages dans le réseau de guides 13 et sont ensuite focalisés par un coupleur de sortie 14 dans des guides de sortie 15. Chaque signal optique subit les opérations suivantes :
- une diffraction dans le coupleur d'entrée 12, mathématiquement représentée par la transformée de Fourier du signal subissant la diffraction, chaque guide du réseau 13 situé au niveau de la surface de sortie du coupleur 12 recevant une partie de l'onde diffractée,
- des déphasages dans le réseau de guides 13 à chemins optiques variables, le chemin optique parcouru dans un guide du réseau s'exprimant en fonction de l'indice de réfraction du guide et de sa longueur; les déphasages produisant en sortie du réseau de guides 13 des interférences qui sont constructives dans une direction dépendant de la longueur d'onde,
- une focalisation sur la surface de sortie du coupleur 14 des interférences constructives des ondes issues des guides du réseau 13.

Un tel AWG n'est pas capable seul de filtrer les longueurs d'onde.

La demande de brevet JP11006928 divulgue un AWG associé à des composants comportant chacun un filtre couches minces.

De tels filtres couches minces sont connus en soi et se composent d'une succession de couches minces, d'indices de réfraction différents. Les filtres couche minces présentés dans ce document sont de type passe bande et sont aptes à éliminer ainsi les longueurs d'ondes indésirables afin d'éviter notamment des mélanges inter symboles ou 'crosstalk'.

Ces composants à filtre couche minces sont intercalés dans les guides de sorties de l'AWG de sorte qu'ils engendrent des pertes optiques supplémentaires.

En outre, pour accueillir ces composants, le substrat de l'AWG comprend des tranchées. Ce type d'insertion de composants pose des problèmes à la fabrication et des problèmes de fiabilité.

L'objet de l'invention est de réaliser un module optique incluant un composant AWG et un filtre couches minces capable, selon les applications, de traiter des longueurs d'ondes (ou canaux) individuellement ou par bande spectrale donnée, le module étant en outre performant, fiable, compact et intégré.

La présente invention propose à cet effet un module optique comprenant :
- un composant multiplexeur/démultiplexeur à réseaux de dispersion angulaire comprenant au moins un guide d'onde d'entrée et au moins un guide d'onde de sortie
- un filtre couches minces,
caractérisé en ce que le module est intégré et comprend en outre au moins une fibre optique d'entrée et au moins une fibre optique de sortie, ledit guide d'onde d'entrée présentant une interface de couplage optique avec la fibre optique d'entrée et ledit guide d'onde de sortie présentant une interface de couplage optique avec la fibre optique de sortie,
et en ce que ledit filtre couches minces est inséré directement à l'interface de couplage optique entre le(s) guide(s) d'onde d'entrée et/ou de sortie du composant multiplexeur/démultiplexeur et la(les) fibre(s) optique(s) d'entrée et/ou de sortie du module.

Contrairement à l'art antérieur, le filtre couche minces selon l'invention n'est pas compris dans un composant supplémentaire rajouté dans le module.

Selon les modes de mise en oeuvre, le filtre couches minces est déposé sur la facette de couplage de la (des) fibre(s) optique(s) d'entrée et/ou de sortie du module, ou sur la facette de couplage du (des) guide(s) d'onde d'entrée et/ou de sortie du composant.

La facette de couplage joue ainsi le rôle de substrat du filtre couche minces selon l'invention.

Selon une particularité, les interfaces de couplage optique entre le(s) guide(s) d'onde d'entrée et/ou de sortie du composant multiplexeur/démultiplexeur et la(les) fibre(s) optique(s) d'entrée et/ou de sortie du module sont des interfaces collées.

Selon un mode de réalisation avantageux, le composant multiplexeur/démultiplexeur à réseaux de dispersion angulaire est intégré sur un substrat monolithique et le module optique est intégré sur un substrat hybride.

Dans un premier mode de réalisation préféré, ledit filtre couches minces est apte à sélectionner un unique ordre de dispersion du signal de sortie dudit composant.

Une conséquence directe de la diffraction des signaux optiques dans le réseau de guide d'un AWG classique est que le spectre de chaque signal optique dans les guides de sortie se reproduit sur différents ordres de diffraction. En effet, le déphasage introduit dans le réseau de guide est limité à un modulo 2π.

Ainsi, comme illustré sur la figure 2 dans le cas d'un démultiplexeur à 16 canaux, les signaux d'entrée peuvent être transmis démultiplexés en sortie sur plusieurs ordres de diffraction à un intervalle de longueur d'onde correspondant à un paramètre de l'AWG connu sous l'acronyme anglais de FSR pour Free Spectral Range. Ce paramètre représente l'espacement spectral entre deux ordres de diffraction successifs et dépend des propriétés matérielles de l'AWG, en particulier de la géométrie des coupleurs 12 et 14.

Or, cette répétition du spectre optique peut être un inconvénient dans certaines applications. En particulier, lorsque des signaux différents transmettant des données différentes se propagent respectivement à des longueurs d'onde correspondant à λ₁+FSR et λ₁, et que ces signaux se retrouvent démultiplexés et transmis dans le même guide de sortie.

Aussi, la réponse spectrale du filtre couches minces selon l'invention est avantageusement ajusté pour ne permettre la transmission en signal de sortie de l'AWG que d'un unique ordre de diffraction. Dans ce premier mode de réalisation, les autres ordres sont éliminés c'est-à-dire qu'ils ne sont pas réutilisées.

Par exemple, à partir dun signal d'entrée composé de longueurs d'onde dans les deux bandes de transmission C (1530-1560 nm environ) et L (1565-1610 nm environ), le module va démultiplexer et transmettre uniquement les longueurs d'onde de la bande C.

Dans un deuxième mode de réalisation préféré, ledit filtre couches minces est apte à autoriser la transmission d'un groupe de longueurs d'onde et est apte à réfléchir des longueurs d'onde distinctes dudit groupe de longueurs d'onde.

Par exemple, à partir d'un signal d'entrée composé de longueurs d'onde dans l'une des bandes de transmission C ou L, le module va démultiplexer et transmettre uniquement un groupe de longueurs d'onde dans cette bande C ou L, par exemple quatre ou huit longueurs d'onde d'une même sous-bande, et réfléchir les autres longueurs d'ondes pour leur réutilisation. Ces autres longueurs d'onde sont par exemple redirigées au moyen d'un circulateur optique en amont ou intégré au module selon l'invention.

Selon les applications, le module optique est un module de multiplexage/démultiplexage en longueur d'onde et/ou un module optique de sélection en longueur d'onde.

Les particularités et avantages de la présente invention apparaîtront plus clairement à la lecture de la description qui suit, donnée à titre d'exemple illustratif et non limitatif, et faite en référence aux figures annexées dans lesquelles :
- la figure 1, déjà décrite, illustre la structure classique d'un multiplexeur/démultiplexeur à réseaux de dispersion angulaire ;
- la figure 2, déjà décrite, illustre schématiquement le spectre de démultiplexage d'un multiplexeur/démultiplexeur à réseaux de dispersion angulaire;
- les figures 3a et 3b illustrent schématiquement des mises en oeuvre possibles d'un mode de réalisation préféré de l'invention.

L'invention propose de réaliser un module optique intégré, incluant un composant multiplexeur/démultiplexeur à réseaux de dispersion angulaire (AWG) et un filtre couches minces, qui ne transmette en signal de sortie que certaines longueurs d'onde du signal d'entrée.

Un tel module optique comporte au moins une fibre optique d'entrée (plusieurs dans le cas d'un multiplexeur) et au moins une fibre optique de sortie (plusieurs dans le cas d'un démultiplexeur), ces fibres optiques étant couplées à un composant multiplexeur/démultiplexeur à réseaux de dispersion angulaire (AWG).

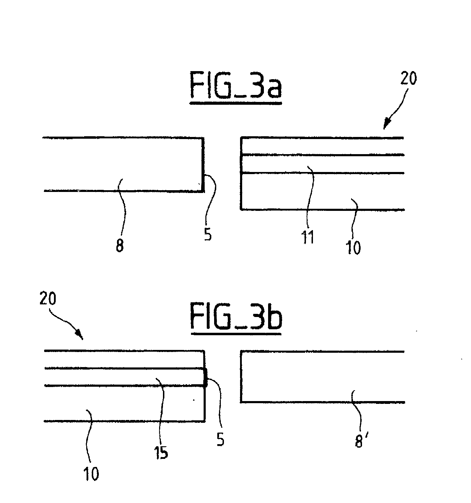

Les figures 3a et 3b illustrent schématiquement les interfaces de couplage optique d'entrée et de sortie selon un mode de réalisation préféré de l'invention.

Comme décrit précédemment, l'AWG 20 comprend au moins un guide d'onde d'entrée 11 présentant une interface de couplage optique avec une fibre optique d'entrée 8 et au moins un guide d'onde de sortie 15 présentant une interface de couplage optique avec une fibre optique de sortie 8'.

De telles interfaces de couplage optique sont généralement collées. En effet, les fibres optiques 8, 8' présentent une section circulaire alors que les guides d'onde 11 et 15 de l'AWG ont une section rectangulaire. De plus, le composant AWG 20 étant intégré monolithique sur un substrat 10, une soudure est par conséquent difficile à réaliser.

L'invention propose d'insérer un filtre couches minces 5 directement à l'interface de couplage optique entre la fibre optique d'entrée 8 ou de sortie 8' et le guide d'onde d'entrée 11 ou de sortie 15 de l'AWG.

Le filtre couches minces se compose d'une succession de couches minces, d'indices de réfraction différents, déposées par pulvérisation ou évaporation sous vide selon des techniques parfaitement maîtrisées de l'homme du métier. En variant le nombre, l'épaisseur et les indices de réfraction des différentes couches superposées, il est possible d'élaborer la réponse spectrale du filtre : le filtre couche mince 5 est conçu de manière à pouvoir sélectionner l'ordre de diffraction adéquat du signal de sortie du composant AWG.

Dans une variante, le filtre couche mince est conçu de manière à autoriser la transmission d'un groupe de longueurs d'onde et à réfléchir les longueurs d'onde distinctes dudit groupe de longueurs d'onde.

Le filtre couches minces 5 est avantageusement déposé sur la facette de couplage de la (des) fibre(s) optique(s) d'entrée 8 ou de sortie 8' du module. En effet, la facette de couplage d'une fibre optique est souvent clivée et comporte généralement un traitement anti-reflet réalisé par une technologie de dépôt de couches minces identique à celle décrite pour la réalisation du filtre couches minces.

Néanmoins, comme illustré sur la figure 3b, le filtre couches minces 5 peut également être déposé sur la facette de couplage du(des) guide(s) d'onde d'entrée 11 ou de sortie 15 du composant 20.

Le filtre couche minces 5 n'est pas compris dans un composant supplémentaire au module selon l'invention car il est directement intégré dans l'interface de couplage optique d'entré ou de sortie. Ainsi, le composant AWG étant intégré sur un substrat monolithique, une intégration hybride avec les fibres optiques d'entrée et de sortie permet d'obtenir le module intégré selon l'invention.

## Revendications

1. Module optique comprenant :
- un composant multiplexeur/démultiplexeur à réseaux de dispersion angulaire (20), ledit composant multiplexeur/démultiplexeur (20) comprenant au moins un guide d'onde d'entrée (11) et au moins un guide d'onde de sortie (15),
- un filtre couches minces,
**caractérisé en ce que**, le module est intégré et comprend au moins une fibre optique d'entrée et au moins une fibre optique de sortie, ledit guide d'onde d'entrée présentant une interface de couplage optique avec la fibre optique d'entrée et ledit guide d'onde de sortie présentant une interface de couplage optique avec la fibre optique de sortie,
et **en ce que** ledit filtre couches minces (5) est inséré directement à l'interface de couplage optique entre le(s) guide(s) d'onde d'entrée et/ou de sortie du composant multiplexeur/démultiplexeur et la(les) fibre(s) optique(s) d'entrée et/ou de sortie du module.

2. Module optique selon la revendication 1, **caractérisé en ce que** le filtre couches minces (5) est déposé sur la facette de couplage de la (des) fibre(s) optique(s) d'entrée et/ou de sortie (8, 8') du module.

3. Module optique selon la revendication 1, **caractérisé en ce que** le filtre couches minces (5) est déposé sur la facette de couplage du (des) guide(s) d'onde d'entrée (11) et/ou de sortie (15) du composant.

4. Module optique selon l'une des revendications précédentes, **caractérisé en ce que** les interfaces de couplage optique entre le(s) guide(s) d'onde d'entrée et/ou de sortie du composant multiplexeur/démultiplexeur et la(les) fibre(s) optique(s) d'entrée et/ou de sortie du module sont des interfaces collées.

5. Module optique selon l'une des revendications précédentes, **caractérisé en ce que** le composant multiplexeur/démultiplexeur à réseaux de dispersion angulaire (20) est intégré sur un substrat monolithique (10).

6. Module optique selon l'une des revendications précédentes, **caractérisé en ce qu'**il est intégré sur un substrat hybride.

7. Module optique selon l'une des revendications précédentes, **caractérisé en ce que** ledit filtre couches minces est apte à sélectionner un unique ordre de dispersion du signal de sortie dudit composant.

8. Module optique selon l'une des revendications 1 à 6, **caractérisé en ce que** ledit filtre couches minces est apte à autoriser la transmission d'un groupe de longueurs d'onde et est apte à réfléchir les longueurs d'onde distinctes dudit groupe de longueurs d'onde.

9. Module optique selon l'une des revendications précédentes, **caractérisé en ce qu'**il constitue un module optique de multiplexage/démultiplexage en longueur d'onde.

10. Module optique selon l'une des revendications précédentes, **caractérisé en ce qu'**il constitue un module optique de sélection en longueur d'onde.
